(19) Europäisches Patentamt
European Patent Office
Office européen des brevets

(11) Publication number: **0 149 986**
**B1**

(12) # EUROPEAN PATENT SPECIFICATION

(45) Date of publication of patent specification: **23.03.88**

(51) Int. Cl.$^4$: **C 08 G 69/48**, C 08 G 69/16, C 08 G 69/40, C 08 G 69/42, C 08 G 69/44

(21) Application number: **84870171.0**

(22) Date of filing: **11.12.84**

(54) **Cross-linked nylon block copolymers and process of their preparation.**

(30) Priority: **12.12.83 US 560714**
**21.06.84 US 623257**
**13.11.84 US 670188**

(43) Date of publication of application:
**31.07.85 Bulletin 85/31**

(45) Publication of the grant of the patent:
**23.03.88 Bulletin 88/12**

(84) Designated Contracting States:
**AT BE CH DE FR GB IT LI LU NL SE**

(56) References cited:
**EP-A-0 067 693**
**EP-A-0 067 694**
**EP-A-0 067 695**
**FR-A-2 322 165**
**US-A-4 031 164**

(73) Proprietor: **DSM RIM NYLON V.O.F**
**Karveelweg 3**
**NL-6222 NJ Maastricht (NL)**

(72) Inventor: **Gabbert, James Delvin**
**22 Wright Place**
**Wilbraham Massachusetts 01095 (US)**
Inventor: **Hedrick, Ross Melvin**
**300 Chassalle Lane**
**St.Louis Missouri 63141 (US)**

(74) Representative: **Hoogstraten, Willem Cornelis Roeland et al**
**OCTROOIBUREAU DSM Postbus 9**
**NL-6160 MA Geleen (NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 149 986 B1

**Description**

Background of the invention

Field of the invention

The present invention relates to the field of high impact nylon materials comprising block copolymers of nylon and elastomer segments. More particularly, the present invention relates to cross-linked nylon block copolymers and processes and compositions useful in preparing the cross-linked nylon block copolymers.

Generally, nylon block copolymers may be alternating blocks of polyamide segments and other segments such as segments of elastomeric polymer residues such as residues of polyethers, polyesters, hydrocarbons or polysiloxanes. These nylon block copolymers are generally prepared by copolymerizing lactam monomer and elastomeric polymers and may either be linear or branched depending upon the structure of the elastomeric polymer used. A more detailed discussion of the structure and method of preparing a particular type of nylon block copolymer can be found in USP No. 4,031,164 issued to Hedrick and Gabbert.

The polyamide segments and segments of elastomeric polymer residues of the nylon block copolymers as defined in the Hedrick and Gabbert patent contribute their respective properties to the final polymer. In order to obtain a higher modulus material, polyamide segments of higher molecular weight and/or of higher weight percent could be employed. Greater tensile elongation and impact properties may be obtained by using higher weight percents of and/or higher molecular weight elastomeric polymers in preparing the nylon block copolymers.

It would be advantageous and an advance in the art to develop other means for varying the properties of nylon block copolymers.

Summary of the invention

The present invention relates to the cross-linking of nylon block copolymers by the use of polyfunctional amines.

The cross-linked nylon block copolymers of the present invention are obtained by providing a reaction scheme wherein polyfunctional amines cross-link nylon block copolymers. This is accomplished by the reaction between acyl lactam functionalized materials and polyfunctional amines to prepare cross-linked acyl lactam functionalized materials which are concurrently or subsequently reacted with lactam monomer in the presence of a lactam polymerization catalyst to form cross-linked nylon block copolymers. The properties of the resulting nylon block copolymers may be varied depending upon the degree of cross-linking. The present invention is directed at the cross-linked nylon block copolymers, cross-linked acyl lactam functionalized materials from which these nylon block copolymers may be prepared and the processes of preparing these cross-linked acyl lactam functionalized materials and nylon block copolymers.

Description of the preferred embodiments

Nylon block copolymers are generally comprised of alternating blocks of polyamide segments

$$(-NH-Y-\overset{O}{\overset{\|}{C}}-)_m$$

wherein Y is an alkylene group and m is an integer greater than one, and residues of elastomeric polymers such as polyethers, hydrocarbons, polyesters or polysiloxanes or combinations thereof. A more detailed description of a particular type of nylon block copolymer can be found in USP No. 4,031,164.

There are numerous methods of preparing nylon block copolymers. One general procedure involves the use of prepolymerized elastomeric polymers (polymers which provide elastomeric segments in nylon block copolymers) and lactam monomer wherein the elastomeric polymer is prepared so as to have a lactam initiator group from which additional lactam monomer polymerizes to form polyamide segments. The lactam initiator group may be an acyl lactam group which is a known initiator of lactam polymerization.

The use of elastomeric polymers prepared to possess acyl lactam groups for the preparation of nylon block copolymers is disclosed in the copending EP—A—0067695. These described acyl lactam functional materials may then be reacted with lactam monomer in the presence of basic lactam polymerization catalyst to form nylon block copolymers.

As discussed above, nylon block copolymers exhibit the properties contributed by the elastomeric polymer residues and polyamide segments.

In accordance with the present invention, it has been determined that by cross-linking nylon block copolymers with polyfunctional amines, the overall properties of the final polymer may be varied even if maintaining the molecular weight and weight percent of the elastomeric polymers constant. In one embodiment, this cross-linking is obtained by providing the reaction between at least one acyl lactam functionalized material and at least one polyfunctional amine and the subsequent or concurrent reaction with lactam monomer in the presence of lactam polymerization catalyst.

For the purpose of the present invention, the term "polyfunctional amine" shall mean an organic compound, such as for example, a polymer, which has been prepared so as to possess at least two primary or secondary amine groups and, more preferably, possessing at least three primary or secondary amine groups. Polyfunctional amines useful in the practice of the present invention may be of varying molecular weight and type of organic compound. It should be noted that polyfunctional amines suitable for the present invention are those of the type which are capable of cross-linking acyl lactam functionalized materials and/or nylon block copolymers. Furthermore, the position of amine functionality may be at the end of the organic compound, pendant from the organic compound, or within the organic compound such as when the amine group is intralinear. The polyfunctional amine must be provided with at least two amine functional groups that are primary or secondary. Tertiary amines would be nonreactive with the acyl lactam functionality of the acyl lactam functionalized material and thus not cross-link nylon block copolymers in accordance with the present invention. However, as it is known by those skilled in the art, typical commercial polyfunctional amine compositions may have a distribution of polyfunctional amines which possess a distribution of primary, secondary and tertiary amines. A composition of this type is useful for practice of the present invention so long as a sufficient amount of polyfunctional amines are provided with at least two and, more preferably, at least three primary or secondary amine groups which will react with the acyl lactam functionality of the acyl lactam functionalized materials and provide for the cross-linking of acyl lactam functionalized materials and ultimately the nylon block copolymer.

As stated above various types and molecular weights of polyfunctional amines are useful for the practice of the present invention so long as they are capable of cross-linking acyl lactam functionalized materials and/or nylon block copolymers. The type of polyfunctional amine used may influence the physical properties of the nylon block copolymer prepared therefrom. Preferred polyfunctional amines include polyether-amines, polyamines, polyester-amines and hydrocarbon-amines. Typical molecular weight ranges for these polyfunctional amines are at least about 60, more preferably from about 500 to about 100,000. As used throughout this discussion of the present invention and the examples that follow, the term "molecular weight" refers to number average molecular weight as determined by procedures well known in the art. More preferred polyfunctional amines are polyoxyalkylene polyamines wherein the alkylene group is $C_2$ to $C_4$, having molecular weights ranging between about 400 and about 5,000. Other preferred polyfunctional amines are hydrocarbon-amines having molecular weights ranging between about 600 and about 100,000. The most preferred polyfunctional amines are polyamines which generally are prepared by the polymerization of alkyleneimines such as ethyleneimine and by polymerization of organic diamines such as alkylene diamines which result in polyamines having intrachain secondary and tertiary amine groups. These preferred polyamines have molecular weights ranging between about 60 to about 50,000. Examples of such polyamines are polyethyleneimines, diethylenetriamine, triethylene tetramine, tetraethylenepentamine and triethylenediamine. Polyetheramines, polyester-amines and hydrocarbon-amines may be prepared from polymers which possess functional groups reactive towards di- or polyfunctionalized amine monomers so as to result in the respective polyfunctional amine. They may also be obtained by reductive amination of polyols, by cyanoethylation of polyols followed by hydrogenation or by reaction of 2 equivalents of diisocyanate with each hydroxy of a polyol and reaction with water. Other methods of preparing such polyfunctional amines are within the skill of those in the art.

The use of polyether-amines or other polyamines of glass temperature below 20°C may have a substantial influence on the tensile elongation and impact properties of the nylon block copolymer prepared therefrom, especially when the polyamine is of a relatively high molecular weight. The effect upon these properties may be to such a degree that the acyl lactam functionalized materials used to prepare the nylon block copolymer may be reduced on a mole for mole basis with the polyamine without affecting the overall properties contributed by the elastomeric polymer residues of the acyl lactam functionalized materials.

For purposes of the present invention the term "acyl lactam functionalized materials" shall mean any elastomeric polymer (i.e. polymer capable of providing elastomeric segments to the nylon block copolymer) such as polyethers, polyesters, hydrocarbons and polysiloxanes which have been prepared so as to possess acyl lactam groups. The term "acyl lactam group" shall mean for the purposes of the present invention the $C_3$ to $C_{14}$ lactam derivative of a carboxylic acid, a sulfonic acid, a phospho- acid, a thiocarboxyl derivative of carboxylic acid, or an equivalent acid. The term "acyl lactam functionality" shall mean the number of acyl lactam groups possessed by a molecule of the acyl lactam functionalized material. These acyl lactam functionalized materials may be prepared by any known means. The preferred acyl lactam groups are derived from carboxylic acid groups. For the purpose of the present invention, elastomeric polymer shall mean a polymer which when co-reacted with lactam monomer provides a nylon block copolymer possessing tensile recovery of at least about 50 percent. For this test, tensile recovery is determined on a dry, as molded sample of polymer elongated 50% of its initial length (l) and held for ten minutes before release of tension. Ten minutes after release, the length ($l_r$) of the sample is measured. The percentage of tensile recovery is

$$\frac{1.5\ l-l_r}{0.5l}\times 100.$$

While it is required that the nylon block copolymer be comprised of at least 50 weight percent of the elastomeric polymer in order to determine whether it imparts the tensile recovery set forth above, it should be appreciated that the amount of elastomeric polymer in the nylon block copolymer compositions of the present invention is not limited to at least 50 weight percent since lower and higher amounts in the range of 10 to 90 weight percent also impart improved properties to nylon polymer.

The acyl lactam functionalized material is derived from elastomeric polymers having molecular weight ranging between about 200 and about 15,000, more preferably about 1000 to 10,000 and even more preferably 1000 to 6000. Preferred acyl lactam functionalized materials are those derived from polyethers having molecular weights greater than 1000, preferably greater than 2000 and more preferably between about 4,000 and about 8,000. Other preferred acyl lactam functionalized materials are those derived from hydrocarbons having molecular weights of at least 1,000, and preferably about 2,000 to about 5,000. Other preferred acyl lactam functionalized materials are prepared from polyesterethers or polyester-hydrocarbons, wherein the polyester is prepared from polyethers or hydrocarbons of molecular weights of at least 1000, cross-linked by di- or tri-functional acid halides.

One preferred acyl lactam functionalized material of the present invention has the following general structure:

$$Z\text{—}[O\text{—}A\text{—}(Q)_b]_n$$

wherein:

Q is a residue of a $C_3$ to $C_{12}$ lactam, preferably ε-caprolactam and 2-pyrrolidone, more preferably, 2-pyrrolidone;

Z is an elastomeric polymer segment and, more preferably, a segment of a polyether, a polyester-ether, a polyester-hydrocarbon, a hydrocarbon, or mixtures thereof;

A is selected from the group consisting of

$$-\overset{O}{\overset{\|}{C}}-R-(\overset{O}{\overset{\|}{C}})_b; \quad -\overset{O}{\overset{\|}{C}}-, \quad -\overset{O}{\overset{\|}{C}}-\overset{O}{\overset{\|}{C}}-, \quad -SO_2-, \quad -POR_1-,$$

and mixtures thereof, and more preferably,

$$-\overset{O}{\overset{\|}{C}}-R-(\overset{O}{\overset{\|}{C}})_b;$$

b is an integer equal to 1, 2 or 3;

R is selected from hydrocarbon and polyether groups;

$R_1$ is selected from alkyl, aryl, aralkyl, alkyloxy, aryloxy, aralkyloxy, and halogen groups; and

n is an integer greater than 1, preferably greater than 2 and, more preferably, equal to 3.

These preferred acyl lactam functionalized materials are generally prepared by the reaction of hydroxy functionalized polymers, such as polyethers, hydrocarbons, polyesters containing polyether segments or hydrocarbon segments, or polysiloxanes with polyfunctional acid halides providing R groups of molecular weight up to 300 such as terephthaloyl halide or isophthaloyl halide (wherein R is phenylene) in the presence of an acid scavenger, and the subsequent reaction with lactam monomer. It should be noted, however, that those skilled in the art will recognize that these preferred acyl lactam functionalized materials may be prepared by various means. The above referred to "Z" segments have the same molecular weight limitations as discussed above for the elastomeric polymers useful for the preparation of acyl lactam functionalized materials. Suitable polyether Z segments are the various polyalkyeneoxides such as polyethyleneoxides, polypropyleneoxides and poly(tetramethyleneoxides). Examples of suitable polymeric hydrocarbon segments are the various polyalkenes and polyalkadienes and alkadiene copolymers such as polyethylene, polypropylene, and polybutadiene and copolymers of butadiene and acrylonitrile. Examples of suitable polyester segments are those prepared by reacting polyether polyols such as polyoxypropylene polyol or polyoxyethylene polyol with polyfunctional acid halides such as terephthaloyl chloride so as to form a polyesterether or by reacting a polymeric hydrocarbon polyol such as polybutadiene diol with a polyfunctional acid halide such as terephthaloyl chloride so as to form a polyesterhydrocarbon. Examples of suitable polysiloxane segments are silicon polycarbinol and polydimethylsiloxane diols and polyols.

The cross-linked nylon block copolymers of the present invention are prepared under conditions so as to cause the polyfunctional amines to react with the acyl lactam group of the acyl lactam functionalized materials prior to or concurrent with the polymerization of the lactam monomer. This results in cross-linking the acyl lactam functionalized materials which upon the subsequent or concurrent polymerization of lactam monomer results in the cross-linked nylon block copolymers. It should be noted that in accordance with the present invention it is suitable to use one particular type of acyl lactam functionalized material and/or polyfunctional amine in practicing the invention or it is suitable to use mixtures of the above described acyl lactam functionalized materials and/or polyfunctional amines.

The final nylon block copolymer will typically be comprised of at least about 10 percent by weight of the lactam block polymer, preferably between about 10 and 90 weight percent and more preferably about 60 to about 80 weight percent.

The reaction between the acyl lactam functionalized materials and the polyfunctional amines may be carried out as a distinct independent reaction with the lactam monomer and basic lactam polymerization catalyst being added subsequently. This reaction between the acyl lactam functionalized materials and the polyfunctional amines may be carried out by mixing at least one acyl lactam functionalized material and at least one polyfunctional amine together in either an organic solvent or in lactam monomer, such as caprolactam, at temperatures between about 100° to about 150°C for a reasonable period of time. The lactam monomer and lactam polymerization catalyst, which will be necessary to polymerize the lactam monomer in preparation of nylon block copolymers may be added subsequent to this reaction.

The reaction between acyl lactam functionalized material and the polyfunctional amine may also be conducted in the presence of the lactam monomer and catalyst. If this process is selected, the reaction conditions may be chosen to allow the reaction between the polyfunctional amine and the acyl lactam functionalized material to be preferred over lactam monomer polymerization. This may be accomplished by maintaining the reaction temperature below the optimum temperature for lactam polymerization such as by maintaining the temperature below about 100°C at the mixing step and then raising it to a temperature above about 100°C such as in the range of 110 to 150°C in order to enhance the lactam monomer polymerization. Preferably the reaction conditions are selected to allow the reactions to occur concurrently, for example by raising the temperature rapidly to 130—150°C after the reactants are mixed.

The amount of polyfunctional amine used for the practice of the present invention should be sufficient to improve the tensile properties and or the tear strength of the nylon block copolymer. The amount will depend to a large extent on the molecular weight and functionality of the polyamine, lesser amounts being required when the molecular weight or the functionality is high. The polyamine is present in an amount of at least 0.02 equivalent, preferably at least 0.2 equivalent and even more preferably 0.3 to 0.6 equivalent of amine (primary and secondary) per equivalent of acyl lactam functionalised material.

The resulting linkage between the polyfunctional amine and the acyl lactam group of the acyl lactam functionalized material is believed to be represented as follows:

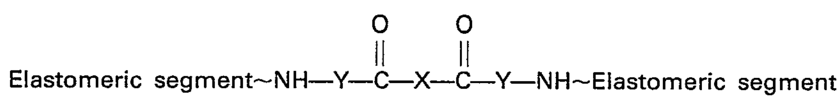

wherein X is the residue of the polyfunctional amine, wherein the linkage is provided by the amine groups of the polyfunctional amine and the carbonyl group of the lactam residue. The polyfunctional amine from which X is derived, as stated above may have the amine groups positioned at the terminal positions of the polymer molecule, pendant from the polymer molecule or incorporated into the polymer as intrapolymer groups.

A representative nylon block copolymer which has been prepared from a preferred acyl lactam functional material cross-linked by a polyfunctional amine has the following general formula:

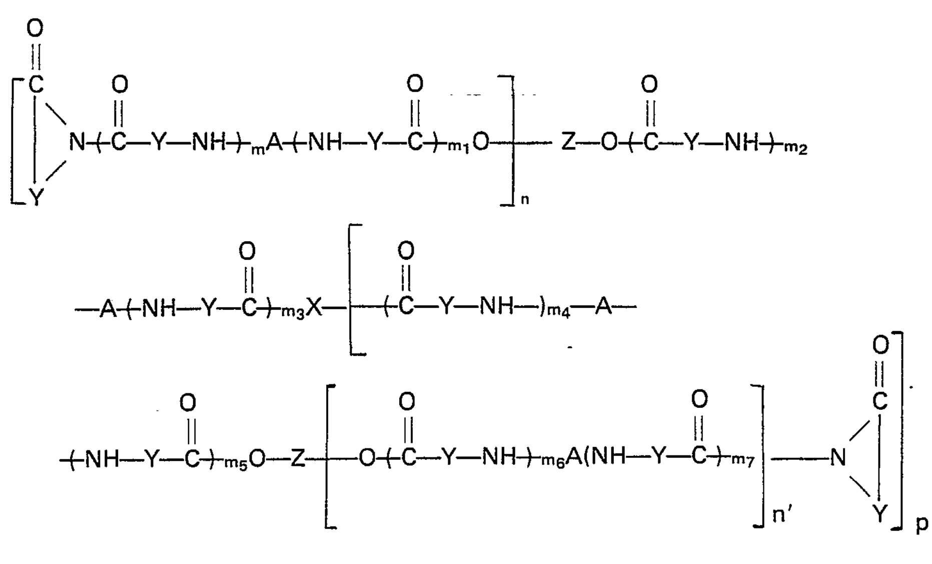

wherein

Z and A are as defined hereinabove.

X is a residue of a polyfunctional amine preferably a polyether amine, a polyester derived from a polyether amine or a polymeric hydrocarbon amine, a polymeric hydrocarbon amine, or a polyamine;

Y is an alkylene or substituted alkylene having from about 3 to about 14 carbon atoms, preferably 3 or 5 carbon atoms and, more preferably, 5 carbon atoms;

p is an integer equal to or greater than 1 and preferably greater than 3;

m, $m_1$, $m_2$, $m_3$, $m_4$, $m_5$, $m_6$, and $m_7$, are each an integer equal to one or more; and

n and n′ are each an integer equal to one or more, preferably two or more, and more preferably, three or more.

It should be noted from the above cross-linked nylon block copolymer formula that the reaction between the acyl lactam functionalized elastomeric segment and polyfunctional amine would result in an amide linkage (~NH—Y—CO—X—CO—Y—NH~) between the functionalized elastomeric segment and the polyfunctional amine.

Examples 1 and 2

The following examples demonstrate two processes of cross-linking acyl lactam functionalized elastomeric segments. Example 1 demonstrates the process of the present invention starting with the reaction of polyol and bisimide (or bis acyl lactam) to form the acyl lactam functionalized elastomeric segment which is subsequently reacted with polyfunctional amine and then lactam monomer. Example 2 demonstrates the process of the present invention starting with an acyl lactam functionalized elastomeric segment which is cross-linked by a polyfunctional amine and subsequently reacted with lactam monomer. Two examples, 1′ and 2′ were prepared by the exact procedure and from the same materials as Examples 1 and 2 minus the polyfunctional amine for comparing the properties between cross-linked nylon block copolymer in accordance with the present invention and a nylon block copolymer absent such cross-linking.

Example 1

A 500 milliliter (ml) flask was charged with 117 grams (gms) of an ethylene oxide capped polyoxypropylene triol molecular weight (m.w.) approximately 4,800, 26.3 gms adipyl bis caprolactam, 5 gms caprolactam and 1.5 gms Flectol H (an antioxidant). (Flectol is a registered trade mark of Monsanto company). The mixture was heated and stirred under vacuum at 1 milliliter Hg vacuum (=130 Pa) at 125°C for 30 minutes and then cooled to 85°C.

In a second flask, 225 gms caprolactam was dried by heating under vacuum until 25 ml of material distilled off. The caprolactam was then cooled to 75°C and 15 ml of a 3 molar ethyl magnesium bromide in diethyl ether solution was added. This flask was evacuated to thoroughly degas, and 3.7 gms of a polyoxypropylene diamine (approximate m.w. 230) was mixed in.

The contents of both flask were simultaneously injected into a previously heated to 130°C closed Teflon® lined two sectional mold. The two mold sections were separated by a 1/8″ Teflon spacer. The contents were injected into the mold through a 1/4 inch×6 inch Kenics static mixer using two #5 Zenith gear pumps at 200 revolutions per minute (rpm).

After 5 minutes, the casting was removed from the mold. The resulting nylon block copolymer molding contained 40% polyether.

Example 2

An acyl lactam functionalized material was prepared by reacting ethylene oxide capped polyoxypropylene triol (approximate m.w. 4800), terephthaloyl chloride and excess caprolactam in tetrahydrofuran at 40°C in the presence of triethylamine (acting as the acid scavenger). The molar ratio of triol to terephthaloyl chloride used to prepare this functionalized material was 2:5.

A 500 ml flask was charged with 134 gms of the above described acyl lactam functionalized material and 43 gms caprolactam. The mixture was heated under vacuum at a pot temperature of 140°C to distill off 25 ml caprolactam and then cooled to 85°C.

In a second flask a 0.23 molar bromomagnesium caprolactam solution was prepared by adding 15 ml of a 3 molar ethyl magnesium bromide in diethyl ether solution to 200 gms dry caprolactam. Then 2.12 ml (2.0 gm) of a polyoxypropylene diamine (approximate m.w. 230) was added. The equivalents of primary and secondary amines of the polyfunctional amine were 30 percent of the acyl lactam group equivalent of the acyl lactam functionalized material. The material of the two flasks were injected into a mold as described above for Example 1. After 5 minutes, the casting was removed from the mold to give a nylon block copolymer containing 40% polyether.

Comparative Examples 1′ and 2′

Two comparative examples 1′ and 2′ were prepared in accordance with the same procedure and using the same materials (minus the polyfunctional amine) as described above for the corresponding Examples 1 and 2.

The nylon block polymer castings prepared in Examples 1 and 2 and Comparative Examples 1′ and 2′ were tested for various properties substantially in accordance with the procedures:

| | | |
|---|---|---|
| Tensile strength: | ASTM 638 | [units are pounds per square inch (psi) or megapascals (MPa)]. |
| Tear strength: | ASTM D1004 | [units are pounds-force per linear inch (pli) or newtons per meter (N/m)]. |
| Tensile modulus: | ASTM D638 | [units are pounds per square inch (psi) or megapascals (MPa)]. |
| Tensile elongation: | ASTM D638 | [units in %] |

The resultant properties for Examples 1 and 2 and Comparative Examples 1′ and 2′ are listed below in Table I. As is seen from Table I, the properties of the nylon block copolymer were generally improved by the cross-linking. The one property which was adversely affected by cross-linking was flexural modulus. However, for certain applications, this decrease is insiginificant.

TABLE I

| | Tensile properties | | | Flexural | Tear |
|---|---|---|---|---|---|
| | Strength (psi) MPa | Elong. % | Recovery* % | modulus (psi) MPa | strength (pli) n/m |
| Comparative Example 1′ | (3350) 23.098 | 320 | 78 | (10100) 69.639 | (407) 71273.026 |
| Example 1 | (3360) 23.167 | 370 | 78 | (8000) 55.160 | (415) 72673.97 |
| Comparative Example 2′ | (3570) 24.615 | 320 | — | (16700) 115.146 | (420) 73549.56 |
| Example 2 | (3720) 25.649 | 330 | 72 | (13400) 92.393 | (450) 78803.1 |

*Tensile recovery was determined after tensile break.

Examples 3 through 9

Examples 3 through 9 demonstrate the use of di- and tri-functional amines for cross-linking nylon block copolymers in accordance with the present invention.

A master batch of acyl lactam functionalized material solution was prepared by charging 1800 gms of an acyl lactam functionalized elastomeric segment, prepared as described for Example 2, into a flask along with 18 gms Flectol ODP antioxidant (Flectol is a registered trade mark of Monsanto Company). The mixture was heated while stirring vigorously for 1 hour at 100°C under 1 mm Hg (=130 Pa) vacuum to remove any moisture. The mixture was then cooled to 75°C, and separated into 200 gm portions for preparing Examples 3—9.

A master batch of 0.18 molar caprolactam magnesium bromide in caprolactam (catalyst solution) was prepared by adding 60 ml of a 3-molar ethyl magnesium bromide in diethyl ether solution to 1000 gms dry molten caprolactam followed by thorough degassing under 1 mmHg (=130 Pa) vacuum. Polyfunctional amines were added to the catalyst solution in the amounts and type for each of the examples as in Table II.

TABLE II

| Example No. | Amine used | Mixture catalyst solution/amine (gm) Catalyst sol. | Amine | Equiv.[3] Amine (%) |
|---|---|---|---|---|
| 3 | HMD[1] | 112.9 | 1.54 | 25% |
| 4 | HMD[1] | 137.3 | 2.64 | 33% |
| 5 | HMD[1] | 109.7 | 2.33 | 37.5% |
| 6 | HMD[1] | 103.8 | 2.41 | 40% |
| 7 | TAN[2] | 118.2 | 1.60 | 25% |
| 8 | TAN[2] | 146.6 | 2.48 | 30% |
| 9 | TAN[2] | 163.4 | 2.91 | 32% |

[1]1,6 Hexane diamine
[2]Triaminononane
[3]Equivalent percent of amine functionality (primary and secondary amine functionality combined) per total acyl lactam functionality calculated for each 200 gm portion of acyl lactam functionalized material.

The functionalized material solution and catalyst solution containing the polyfunctional amine were pumped into a previously heated to 130°C vertical Teflon-lined two-section mold. The mold sections were held apart by 1/8" Teflon spacers. The solutions were pumped into the mold through a 1/4 inch×6 inch Kenics static mixer by two #5 Zenith gear pumps at 200 rpm.

The pumping ratios were 2.57 ml functionalized material solution to 1 ml catalyst solution. The nylon block copolymer set into a hard resin in 30 or 60 seconds in each example.

Listed below in Table III are the resulting properties obtained for Examples 3—9. These properties were determined as described above for Examples 1 and 2.

TABLE III

| Example No. | Tensile strength MPa | (psi) | Tensile elongation | Tensile* recovery |
|---|---|---|---|---|
| 3 | 8.480 | 1230 | 300 | 92 |
| 4 | 8.756 | 1270 | 383 | 86 |
| 5 | 11.859 | 1720 | 407 | 90 |
| 6 | 10.894 | 1580 | 449 | 88 |
| 7 | 7.515 | 1090 | 317 | 88 |
| 8 | 8.136 | 1180 | 472 | 85 |
| 9 | 6.550 | 950 | 364 | 88 |

*Tensile recovery was determined after tensile break.

Examples 10—16

Examples 10—16 demonstrate the effect upon the properties of a nylon block copolymer cross-linked by amines in accordance with the present invention wherein diamines and triamines are used at differing mole percentages.

Each example was prepared from an acyl lactam functionalized material solution master batch. This master batch was prepared by charging to a 2 liter flask, 1067 grams of functionalized material, as prepared above in Example 2, 158 gms caprolactam, 0.4 gms cupric acetate monohydrate. The mixture was dried by distilling off 25 ml of material under vacuum at 140°C. The dried solution was held at 100°C under vacuum until used at which time the vacuum was released to nitrogen.

Individual batches (200 gms) of catalyst solution were made for each respective example. Each of these individual catalyst batches were prepared by charging to a 500 ml flask 193 gms caprolactam plus the amine to be used in the amount shown below in Table IV. The catalyst solution was dried by distilling off 25 ml of material under oil pump vacuum at 140°C. The temperature was adjusted to 125°C, and 32 gms of a catalyst concentrate was added and dissolved to each batch. The catalyst concentrate contained 1.05 moles/Kg of caprolactam magnesium bromide in caprolactam. Each of the prepared catalyst solutions contained 0.16 moles/Kg of caprolactam magnesium bromide. The catalyst solutions were held at 100°C under vacuum until use at which time vacuum was released to nitrogen. Table IV below shows the type and amount of amine used and the mole percent of amines to acyl lactam groups.

TABLE IV

| Example | Amine used | Equivalent amine[1] (%) | Gms amine |
|---|---|---|---|
| 10 | None | 0 | 0 |
| 11 | Pel-6[2] | 30 | 1.17 |
| 12 | PEI-6[2] | 60 | 2.24 |
| 13 | PEI-6[2] | 90 | 3.41 |
| 14 | PEI-6[2] | 150 | 5.66 |
| 15 | PEI-18[3] | 60 | 2.24 |
| 16 | PEI-18[3] | 90 | 3.41 |

[1] Equivalent amine functionality (combined primary and secondary) per acyl lactam functionality of acyl lactam functionalized material assuming a 1:1 mix ratio of the functionalized material solution to catalyst solution.

[2] PEI-6-Poly(ethylene imine) having a molecular weight of 600. Amine groups are distributed as 25% primary, 50% secondary and 25% tertiary.

[3] PEI-18-Poly(ethylene imine) having a molecular weight of 1800. Distribution of amine types same as PEI-6.

The functionalized material solution and catalyst solution prepared above were pumped simultaneously through a ¼ inch Kenics static mixer into a previously heated to 130°C vertical mold measuring 8″×8″×1/8″ by two #5 Zenith gear pumps at 200 rpm. The resulting nylon block copolymer molding contained 40% polyoxypropylene.

The above moldings of Examples 10—16 were tested for the properties listed below in Table V according to the test procedures set forth above for Examples 1 and 2 with the additional testing of flex recovery being conducted as follows:

Flex recovery—molding bent 180° around 1/2″ Mandrel for 30 seconds. Relaxed and recovery reading taken after 5 mins. Units in percent (%).

The results of this testing are given below in Table V.

TABLE V

| No. | Equiv. Amine % | Tensile strength (psi) | Tensile strength MPa | Tensile elongation % | Tensile modulus (psi) | Tensile modulus MPa | Tear strength (pli) | Tear strength N/m | Flex. recov. % |
|---|---|---|---|---|---|---|---|---|---|
| 10 | 0 | (4850) | 33.440 | 340 | (54,300) | 374.399 | (650) | 113826.7 | 79 |
| 11 | 30 | (5710) | 39.370 | 400 | (72,400) | 499.198 | (800) | 140094.4 | 73 |
| 12 | 60 | (5870) | 40.474 | 380 | (75,600) | 521.262 | (830) | 145347.94 | 73 |
| 13 | 90 | (5140) | 35.440 | 320 | (67,100) | 462.654 | (770) | 134840.86 | 74 |
| 14 | 150 | (5250) | 36.199 | 330 | (48,100) | 331.649 | (770) | 134840.86 | 73 |
| 15 | 60 | (5650) | 38.956 | 350 | (75,900) | 523.330 | (810) | 141845.58 | 72 |
| 16 | 90 | (5460) | 37.646 | 340 | (70,300) | 484.718 | (780) | 136592.04 | 73 |

The properties of tensile elongation, tensile strength, tensile modulus and tear strength show improvement between the equivalent amine percent of about 30 and about 60 with these properties decreasing after about 60 percent but still being better than those of Example 10. Flex recovery appeared to suffer from cross-linking but for certain applications this would not be detrimental. Overall, the property picture is improved.

Examples 17—20

Examples 17 through 20 demonstrate the properties of nylon block copolymers cross-linked with a polyether-triamine in accordance with the present invention and wherein the amount of acyl lactam functionalized material used to prepare the nylon block copolymer was reduced as the amount of polyetheramine used. The effect of the elastomeric properties contributed by the polyether-amine compensated for the lessened amount of acyl lactam functionalized material used to prepare the nylon block copolymer.

The acyl lactam functionalized material was prepared as described above in Example 2. A batch of functionalized material in caprolactam solution was prepared for Examples 17—20, respectively. The respective amounts of functionalized material and caprolactam used for each example solution is shown in Table VI below.

TABLE VI

| Example | Functionalized material (gm) | Caprolactam[1] (gm) |
|---|---|---|
| 17 | 132 | 43 |
| 18 | 124 | 51 |
| 19 | 131 | 44 |
| 20 | 120 | 55 |

[1]Caprolactam charge includes 25 gms extra for distilling in order to dry the solution. The charge also includes 0.06% by weight of cupric acetate hydrate (antioxidant).

A catalyst solution was prepared for each example in accordance with the procedure set forth above for Examples 10—16. Each solution had a resulting concentration of 0.16 moles of caprolactam magnesium bromide per kg of caprolactam solution. Polyfunctional amines were added to the catalyst solution with the type, amount and resulting equivalency of amine functionality (primary and secondary) per acyl lactam equivalency for each example listed below in Table VII.

TABLE VII

| Example | Gms. Caprolactam[1] | Amine used | Equivalency amine% | Gms. amine | Gms. catalyst concentrate |
|---|---|---|---|---|---|
| 17 | 191 | T-403[2] | 20 | 1.8 | 32 |
| 18 | 185 | T-403[2] | 100 | 8.1 | 32 |
| 19 | 191 | T-3000[3] | 4 | 2.5 | 32 |
| 20 | 176 | T-3000[3] | 30 | 17.2 | 32 |

[1] Caprolactam includes 25 gms extra for distillation.
[2] Polyoxypropylene triamine, approx. m.w. 400 (Jeffamine® T-403)
[3] Polyoxypropylene triamine, approx. m.w. 3000 (Jeffamine® T-3000)

Each of the examples were tested for the properties listed below in Table VIII in accordance with the testing procedures discussed above. The results of this testing are listed below for each example with the properties of Example 10 being repeated for comparison.

TABLE VIII

| Example | Amine Eq.- % | Tensile strength (psi) | Tensile strength MPa | Tensile elongation % | Tensile modulus (psi) | Tensile modulus MPa | Tear strength (pli) | Tear strength N/m | Flex. recov. % |
|---|---|---|---|---|---|---|---|---|---|
| 10 | 0 | (4850) | 33.441 | 340 | (54,300) | 374.398 | (660) | 115577.88 | 79 |
| 17 | 20 | (5370) | 37.026 | 390 | (73,900) | 509.540 | (780) | 136592.04 | 73 |
| 18 | 30 | (5900) | 40.680 | 460 | (65,100) | 448.864 | (790) | 138343.22 | 74 |
| 19 | 4 | (5960) | 41.094 | 450 | (60,300) | 415.768 | (820) | 143596.76 | 73 |
| 20 | 30 | (4800) | 33.096 | 350 | (56,100) | 386.809 | (780) | 136592.04 | 72 |

It can be seen from the results in Table VIII above that there is a significant improvement in the properties of the nylon block copolymers which were cross-linked. The above results also evidence the significant improvement obtained from polyfunctional amines wherein the amine functionality (primary and secondary) is at least three.

While the preferred embodiments have been described above various substitutions and modifications may be made thereto without departing from the scope of the invention. Accordingly, it is to be understood that the present invention has been described by way of illustration, not limitation.

## Claims

1. A process of producing a polymer, that comprises reaction of at least one acyl lactam functionalised material and at least 0.02 equivalent per equivalent of acyl lactam functionalised material of at least one polyfunctional amine wherein the acyl lactam functionalised material is derived from an elastomeric polymer having a molecular weight between 200 and 15,000, wherein the acyl lactam group is a $C_3$ to $C_{14}$ lactam derivative of a carboxylic acid, a sulfonic acid, a phospho-acid or a thiocarboxyl derivative of a carboxylic acid wherein the amine has a molecular weight of at least 60 and its polyfunctionality is provided by at least 2 primary or secondary amine groups.

2. A process of Claim 1, wherein the acyl lactam functionalised material is derived from a polyether, a polyester-ether, a polyester-hydrocarbon, a hydrocarbon or combinations thereof, wherein the acyl lactam group is derived from a carboxylic acid and wherein the polyfunctional amine is a polyetheramine, a polyester amine, a hydrocarbon amine or combinations thereof.

3. A process of Claim 2, wherein the acyl lactam is derived from a polyether or a hydrocarbon, the polyether or hydrocarbon having a molecular weight of at least 1000.

4. A process of any of the preceding claims wherein the polyfunctional amine has a molecular weight in the range of 60 to 50,000.

5. A process of any of Claims 1 to 3, wherein the polyfunctional amine is a polyether-amine having a molecular weight in the range of 400 to 5000.

6. A process of any of the preceding claims, wherein at least 0.2 equivalent of the polyfunctional amine is reacted per equivalent of acyl lactam functionalised material.

7. A process of any of Claims 1 to 5, wherein 0.3 to 0.6 equivalent of polyfunctional amine is reacted per equivalent of acyl lactam functionalised material.

8. A process of any of the preceding claims, wherein the acyl lactam functionalised material is represented by the general formula $Z[O—A—(Q)_b]_n$ wherein:

Z is a residue of an elastomeric polymer;

A is selected from the group consisting of

$$-\overset{\overset{O}{||}}{C}-R\!\left(\overset{\overset{O}{||}}{C}\right)_{b},\quad -\overset{\overset{O}{||}}{C}-,\quad -\overset{\overset{O}{||}}{C}-\overset{\overset{O}{||}}{C}-,\quad -SO_2-,\ \text{and}\ -POR_1-,$$

wherein:

b is an integer equal to 1, 2 or 3;

R is selected from hydrocarbon and polyether groups;

$R_1$ is selected from alkyl, aryl, aralkyl, alkyloxy, aryloxy, and aralkyloxy groups;

n is an integer greater than 1, preferably greater than 2 and, more preferably equal to 3; and

Q is the residue of epsilon-caprolactam, or 2-pyrrolidone.

9. A process of Claim 8 wherein the Z segment is a polyether, a hydrocarbon, a polyester-ether, or a polyester-hydrocarbon of molecular weight at least 1000 and A is

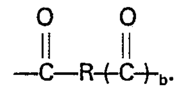

10. A process of Claim 9, wherein R is 1,3 or 1,4-phenylene and the polyfunctional amine is a polyether-amine having a molecular weight in the range of 400 to 5000.

11. A polymer obtainable by reaction of at least one acyl lactam functionalised material and at least 0.02 equivalent per equivalent of acyl lactam functionalised material of at least one polyfunctional amine wherein the acyl lactam functionalised material is derived from an elastomeric polymer having a molecular weight between 200 and 15,000, wherein the acyl lactam group is a $C_3$ to $C_{14}$ lactam derivative of a carboxylic acid, a sulfonic acid, a phosphoacid or a thiocarboxyl derivative of a carboxylic acid and wherein the amine has a molecular weight of at least 60 and its polyfunctionality is provided by at least 2 primary or secondary amine groups.

12. A polymer of Claim 11, wherein the acyl lactam functionalised material is as defined in any of Claims 2, 3, 8, 9, and 10.

13. A polymer of Claim 11 or Claim 12, wherein the polyfunctional amine is as defined in Claim 4 or Claim 5.

14. A polymer of any of Claims 12 to 14, obtainable by reaction of at least 0.2 equivalent per equivalent of acyl lactam functionalised material of polyfunctional amine with acyl lactam functionalised material.

15. A polymer of Claim 14, obtainable by reaction of 0.3 to 0.6 equivalent of polyfunctional amine per equivalent of acyl lactam functionalised material.

16. A nylon block copolymer comprising blocks of a polymer of any of Claims 11 to 15.

17. A nylon block copolymer obtainable by reaction of at least one $C_3$ to $C_{14}$ lactam, an acyl lactam functionalised material and at least one polyfunctional amine in an amount of at least 0.02 equivalent per equivalent of the acyl lactam functionalised material in the presence of a lactam polymerization catalyst, wherein the weight ratio of $C_3$ to $C_{14}$ lactam to acyl lactam functionalised material and polyfunctional amine is in the range of 9:1 to 1:9, wherein the acyl lactam functionalised material is derived from an elastomeric polymer having a molecular weight between 200 and 15,000, wherein the acyl lactam group is a $C_3$ to $C_{14}$ lactam derivative of a carboxylic acid, a sulfonic acid, a phospho-acid or a thiocarboxyl derivative of a carboxylic acid and wherein the amine has a molecular weight of at least 60 and its polyfunctionality is provided by at least 2 primary or secondary amine groups.

18. A nylon block copolymer of Claim 17, wherein the acyl lactam functionalised material is as defined in any of Claims 3, 8, 9 and 10.

19. A nylon block copolymer of Claim 17 or Claim 18, wherein the polyfunctional amine is as defined in Claim 4 or Claim 5.

20. A nylon block copolymer of any of Claims 17 to 19, wherein the amount of polyfunctional amine is at least 0.2 equivalent per equivalent of acyl lactam functionalised material.

21. A nylon block copolymer of Claim 20 wherein the amount of polyfunctional amine is in the range of 0.3 to 0.6 equivalent per equivalent of acyl lactam functionalised material.

22. A process of preparing a nylon block copolymer which comprises mixing a $C_3$ to $C_{14}$ lactam, an acyl lactam functionalised material, at least one polyfunctional amine in an amount of at least 0.02 equivalent per equivalent of the acyl lactam functionalised material and a lactam polymerization catalyst and subjecting the mix to polymerization conditions, wherein the weight ratio of $C_3$ to $C_{14}$ lactam to acyl lactam functionalised material and polyfunctional amine is in the range of 9:1 to 1:9, wherein the acyl lactam functionalised material is derived from an elastomeric polymer having a molecular weight between about 200 and about 15,000, wherein the acyl lactam group is a $C_3$ to $C_{14}$ lactam derivative of a carboxylic acid, a sulfonic acid, a phospho-acid or a thiocarboxyl derivative of a carboxylic acid and wherein the amine has a molecular weight of at least 60 and its polyfunctionality is provided by at least 2 primary or secondary amine groups.

23. A process of Claim 22, wherein the acyl lactam functionalised material is derived from a polyether, a polyesterether, a polyester-hydrocarbon, a hydrocarbon or combinations thereof, wherein the acyl lactam group is derived from a carboxylic acid and wherein the polyfunctional amine is a polyetheramine, a polyester-ether amine, a polyester-hydrocarbon amine, a hydrocarbon amine or combinations thereof.

24. The process of Claim 23, wherein the acyl lactam functionalised material is represented by the general formula $Z[O—A—(Q)_b]_n$ wherein:

Z is a residue of an elastomeric polymer;

A is selected from the group consisting of

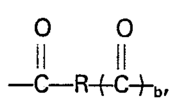 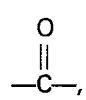 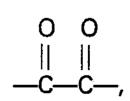 $—SO_2—$, and $—POR_1—$;

wherein;

b is an integer equal to 1, 2 or 3;

R is selected from hydrocarbon or polyether groups;

$R_1$ is selected from alkyl, aryl, aralkyl, alkyloxy, aryloxy, or aralkyloxy groups;

n is an integer greater than 1, preferably greater than 2 and, more preferably equal to 3; and

Q is the residue of epsilon-caprolactam, or 2-pyrrolidone.

25. A process of Claim 24, wherein the Z segment is a polyether, a hydrocarbon, a polyester-ether or a polyester-hydrocarbon of molecular weight at least 1000 and

A is

$$-\overset{O}{\overset{\|}{C}}-R\!\left(\overset{O}{\overset{\|}{C}}\right)_b.$$

26. A process of any of Claims 22 to 25, wherein the polyfunctional amine has a molecular weight in the range of 60 to 50,000.

27. A process of Claim 25, wherein R is 1,3- or 1,4-phenylene and the polyfunctional amine is a polyether-amine having a molecular weight in the range of 400 to 5000.

28. A process of any of Claims 22 to 27, wherein at least 0.2 equivalent of polyfunctional amine is reacted per equivalent of acyl lactam functionalised material.

29. A process of Claim 28, wherein 0.3 to 0.6 equivalent of polyfunctional amine is reacted per equivalent of acyl lactam functionalised material.

30. A process of any of Claims 22 to 29 wherein the mixing step is carried out at a temperature below about 110°C and the polymerization step is carried out at a temperature in the range of about 110 to 150°C.

**Patentansprüche**

1. Verfahren zur Herstellung eines Polymers, dadurch gekennzeichnet, daß wenigstens ein Acyllactam-funktionalisiertes Material und wenigstens 0,02 Äquivalente pro Äquivalent Acyl lactam-funktionalisiertem Material wenigstens eines polyfunktionellen Amins umgesetzt werden, wobei das Acyllactam-funktionalisierte Material von einem elastomeren Polymer mit einer Molekularmasse zwischen 200 und 15.000 abgeleitet ist, die Acyllactamgruppe ein $C_3$- bis $C_{14}$-Lactamderivat einer Carbonsäure, einer Sulfonsäure, eines Phospho-säure oder eines Thiocarboxylderivats einer Carbonsäure ist, und das Amin eine Molekularmasse von wenigstens 60 besitzt une seine Polyfunktionalität durch wenigstens 2 primäre oder sekundäre Amingruppen gebildet ist.

2. Verfahren nach nach Anspruch 1, dadurch gekennzeichnet, daß das Acyllactam-funktionalisierte Material von einem Polyether, einem Polyester-Ether, einem Polyester-Kohlenwasserstoff, einem Kohlenwasserstoff oder Kombinationen hiervon abgeleitet ist, daß die Acyllactamgruppe von einer Carbonsäure abgeleitet ist und daß das polyfunktionelle Amin ein Polyetheramin, ein Polyesteramin, ein Kohlenwasserstoffamin oder eine Kombination hiervon ist.

3. Verfahren nach Anspruch 2, dadurch gekennzeichnet, daß das Acyllactam von einem Polyether oder einem Kohlenwasserstoff abgeleitet ist und der Polyether oder Kohlenwasserstoff eine Molekularmasse von wenigstens 1000 hat.

4. Verfahren nach einem der vorhergehenden Ansprüche, dadurch gekennzeichnet, daß das polyfunctionelle Amin eine Molekularmasse im Bereich von 60 bis 50.000 hat.

5. Verfahren nach einem der Ansprüche 1 bis 3, dadurch gekennzeichnet, daß das polyfunktionelle Amin ein Polyether-Amin mit einer Molekularmasse im Bereich von 400 bis 5000 ist.

6. Verfahren nach einem der vorhergehenden Ansprüche, dadurch gekennzeichnet, daß wenigstens 0,2 Äquivalente des polyfunctionellen Amins pro Äquivalent des Acyllactam-funktionalisierten Materials umgesetzt werden.

7. Verfahren nach einem der Ansprüche 1 bis 5, dadurch gekennzeichnet, daß 0,3 bis 0,6 Äquivalente polyfunktionelles Amin pro Äquivalent des Acyllactam-funktionalisierten Materials umgesetzt werden.

8. Verfahren nach einem der vorhergehenden Ansprüche, dadurch gekennzeichnet, daß das Acyllactam-funktionalisierte Material die folgende allgemeine Formel besitzt:

$$Z\text{—}[O\text{—}A(Q)_b]_n$$

worin:

Z ein Rest eines elastomeren Polymers ist;

A aus der Gruppe umfassend

$$-\overset{O}{\overset{\|}{C}}-R\!\left(\overset{O}{\overset{\|}{C}}\right)_b;\quad -\overset{O}{\overset{\|}{C}}-,\quad -\overset{O}{\overset{\|}{C}}-\overset{O}{\overset{\|}{C}}-,\quad SO_2\quad \text{und}\quad POR_1$$

ausgewählt ist, worin:

b eine ganze Zahl gleich 1, 2 oder 3 ist;

R aus Kohlenwasserstoff- und Polyethergruppen ausgewählt ist;

$R^1$ aus Alkyl-, Aryl-, Aralkyl-, Alkyloxy-, Aryloxy-, Aralkyloxy- und Halogengruppen ausgewählt ist; n eine ganze Zahl von größer als 1, vorzugsweise größer als 2, und insbesondere gleich 3 ist; und Q der Rest von epsilon-Caprolactam oder 2-Pyrrolidon ist.

9. Verfahren nach Anspruch 8, dadurch gekennzeichnet, daß das Z-Segment ein Polyether, ein Kohlenwasserstoff, ein Polyester-Ether oder ein Polyester-Kohlenwasserstoff mit einer Molekularmasse von wenigstens 1000 ist und A für

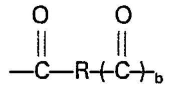

steht.

10. Verfahren nach Anspruch 9, dadurch gekennzeichnet, daß R 1,3- oder 1,4-Phenylen und das polyfunktionelle Amin ein Polyether-Amin mit einer Molekularmasse im Bereich von 400 bis 5000 ist.

11. Ein Polymer, erhältlich durch Umsetzung wenigstens eines Acyllactam-funktionalisierten Material und wenigstens 0,02 Äquivalenten pro Äquivalent des Acyllactam-funktionalisierten Materials wenigstens eines polyfunktionellen Amins, wobei das Acyllactam-funktionalisierte Material von einem elastomeren Polymer mit einer Molekularmasse zwischen 200 und 15.000 abgeleitet ist, die Acyllactamgruppe ein $C_3$- bis $C_{14}$- Lactamderivat einer Carbonsäure, einer Sulfonsäure, einer Phospho-säure oder eines Thiocarboxylderivats einer Carbonsäure ist, worin das Amin eine Molekularmasse von wenigstens 60 besitzt und seine Polyfunktionalität durch wenigstens 2 primäre oder sekundäre Amingruppen gebildet ist.

12. Ein Polymer nach Anspruch 11, dadurch gekennzeichnet, daß das Acyllactam-funktionalisierte Material wie in einem der Ansprüche 2, 3, 8, 9 und 10 definiert ist.

13. Ein Polymer nach Anspruch 11 oder 12, dadurch gekennzeichnet, daß das polyfunktionelle Amin wie in einem der Ansprüche 4 oder 5 definiert ist.

14. Ein Polymer nach einem der Ansprüche 12 bis 14, erhältlich durch Umsetzung von wenigstens 0,2 Äquivalenten pro Äquivalent Acyllactam-funktionalisiertes Material des polyfunktionellen Amins mit Acyllactam-funktionalisiertem Material.

15. Ein Polymer nach Anspruch 14, erhältlich durch Umsetzung von 0,3 bis 0,6 Äquivalenten an polyfunktionellem Amin pro Äquivalent Acyllactam-funktionalisiertem Material.

16. Ein Nylon-Blockcopolymer bestehend aus Blöcken eines Polymers nach einem der Ansprüche 11 oder 12.

17. Ein Nylon-Blockcopolymer erhältlich durch Umsetzung von wenigstens einem $C_3$ bis $C_{14}$-Lactam, einem Acyllactam-funktionalisiertem Material und wenigstens einem polyfunktionellen Amin in einer Menge von wenigstens 0,02 Äquivalenten pro Äquivalent des Acyllactam-funktionalisierten Materials in Gegenwart eines Lactampolymerisationskatalysators, dadurch gekennzeichnet, daß das Massenverhältnis von $C_3$ bis $C_{14}$-Lactam zum Acyllactam-funktionalisierten Material und polyfunktionellen Amin im Bereich von 9:1 bis 1:9 liegt, daß das Acyllactam-funktionalisierte Material von einem elastomeren Polymer mit einer Molekularmasse zwischen 200 und 15.000 abgeleitet ist, daß die Acyllactamgruppe ein $C_3$ bis $C_{14}$-Lactamderivat einer Carbonsäure, einer Sulfonsäure einer Phospho-Säure oder eines Thiocarboxylderivats einer Carbonsäure ist, und daß das Amin eine Molekularmasse von wenigstens 60 hat und seine Polyfunktionalität durch wenigstens 2 primäre oder sekundäre Amingruppen gebildet ist.

18. Ein Nylon-Blockcopolymer nach Anspruch 17, dadurch gekennzeichnet, daß das Acyllactam-funktionalisierte Material wie in einem der Ansprüche 3, 8, 9 und 10 definiert ist.

19. Ein Nylon-Blockcopolymer nach Anspruch 17 oder Anspruch 18, dadurch gekennzeichnet, daß das polyfunktionelle Amin wie in Anspruch 4 oder 5 definiert ist.

20. Ein Nylon-Blockcopolymer nach einem der Ansprüche 17 bis 19, dadurch gekennzeichnet, daß die Menge an polyfunktionellem Amin wenigstens 0,2 Äquivalente pro Äquivalent Acyllactam-funktionalisiertem Material beträgt.

21. Ein Nylon-Blockcopolymer nach Anspruch 20, dadurch gekennzeichnet, daß die Menge an polyfunktionellem Amin im Bereich von 0,3 bis 0,6 Äquivalenten pro Äquivalent des Acyllactam-funktionalisierten Materials liegt.

22. Verfahren zur Herstellung eines Nylon-Blockcopolymers, dadurch gekennzeichnet, daß man wenigstens ein $C_3$- bis $C_{14}$-Lactam, ein Acyllactam-funktionalisiertes Material und wenigstens ein polyfunktionelles Amin in einer Menge von wenigstens 0,02 Äquivalenten pro Äquivalent des Acyllactam-funktionalisierten Materials und einen Lactampolymerisationskatalysator vermischt und das Gemisch Polymerisationsbedingungen unterwirt, wobei das Massenverhältnis von $C_3$ bis $C_{14}$-Lactam zum Acyllactam-funktionalisierten Material und polyfunktionellen Amin im Bereich von 9:1 bis 1:9 liegt, daß das Acyllactam-funktionalisierte Material von einem elastomeren Polymer mit einer Molekularmasse zwischen etwa 200 und etwa 15.000 abgeleitet ist, daß die Acyllactamgruppe ein $C_3$ bis $C_{14}$-Lactamderivat einer Carbonsäure, einer Sulfonsäure einer Phospho-Säure oder eines Thiocarboxylderivats einer Carbonsäure ist, und daß das Amin eine Molekularmasse von wenigstens 60 hat und seine Polyfunktionalität durch wenigstens 2 primäre oder sekundäre Amingruppen gebildet ist.

23. Verfahren nach Anspruch 22, dadurch gekennzeichnet, daß das Acyllactam-funktionalisierte Material von einem Polyether, einem Polyester-Ether, einem Polyester-Kohlenwasserstoff, einem

Kohlenwasserstoff oder Kombinationen hiervon abgeleitet ist, worin die Acyllactamgruppe von einer Carbonsäure abgeleitet ist und worin das polyfunktionelle Amin ein Polyetheramin, ein Polyester-Etheramin, ein Polyester-Kohlenwasserstoffamin, ein Kohlenwasserstoffamin oder eine Kombination hiervon ist.

24. Verfahren nach Anspruch 23, dadurch gekennzeichnet, daß das Acyllactam-funktionalisierte Material die folgende allgemeine Formel besitzt:

$$Z—[O—A(Q)_b]_n$$

worin:

Z ein Rest eines elastomeren Polymers ist;

A aus der Gruppe umfassend

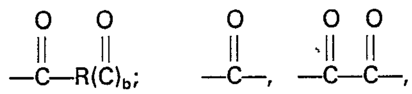 $SO_2$ und $POR_1$

ausgewählt ist, worin:

b eine ganze Zahl gleich 1, 2 oder 3 ist;

R aus Kohlenwasserstoff- und Polyethergruppen ausgewählt ist;

$R^1$ aus Alkyl-, Aryl-, Aralkyl-, Alkyloxy-, Aryloxy-, oder Aralkyloxygruppen ausgewählt ist;

n eine ganze Zahl von größer als 1, vorzugsweise größer als 2, und insbesondere gleich 3 ist; und

Q der Rest von epsilon-Caprolactam oder 2-Pyrrolidon ist.

25. Verfahren nach Anspruch 24, dadurch gekennzeichnet, daß das Z-Segment ein Polyether, ein Kohlenwasserstoff, ein Polyester-Ether oder ein Polyester-Kohlenwasserstoff mit einer Molekularmasse von wenigstens 1000 ist und A für

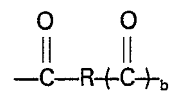

steht.

26. Verfahren nach einem der Ansprüche 22 bis 25, dadurch gekennzeichnet, daß das polyfunktionelle Amin eine Molekularmasse im Bereich von 60 bis 50,000 besitzt.

27. Verfahren nach Anspruch 25, dadurch gekennzeichnet, daß R 1,3- oder 1,4-Phenylen und das polyfunktionelle Amin ein Polyether-Amin mit einer Molekularmasse im Bereich von 400 bis 5000 ist.

28. Verfahren nach einem der Ansprüche 22 bis 27, dadurch gekennzeichnet, daß wenigstens 0,2 Äquivalente des polyfunktionellen Amins pro Äquivalent des Acyllactam-funktionalisierten Materials umgesetzt werden.

29. Verfahren nach Anspruch 28, dadurch gekennzeichnet, daß 0,3 bis 0,6 Äquivalente polyfunktionelles Amin pro Äquivalent des Acyllactam-funktionalisierten Materials umgesetzt werden.

30. Verfahren nach einem der Ansprüche 22 bis 29, dadurch gekennzeichnet, daß die Mischstufe bei einer Temperatur unter etwa 110°C und die Polymerisationsstufe bei einer Temperatur im Bereich von etwa 110 bis 150°C durchgeführt wird.

**Revendications**

1. Procédé de producton d'un polymère, qui consiste à faire réagir au moins une matière fonctionnalisée par un acyl-lactame et au moins 0,02 équivalent par équivalent de la matière fonctionnalisée par l'acyllactame d'au moins une amine polyfonctionnelle, dans lequel la matière fonctionnalisée par l'acyl-lactame est dérivée d'un polymère élastomère ayant une masse moléculaire comprise entre 200 et 15000, dans lequel le groupe acyl-lactame est un dérivé de lactame en $C_{3-14}$ d'un acide carboxylique, un acide sulfonique, un phosphoacide ou un dérivé thiocarboxylique d'un acide carboxylique, dans lequel l'amine présente une masse moléculaire d'au moins 60 et sa polyfonctionnalité est assurée par au moins deux groupes amine primaire ou secondaire.

2. Procédé selon la revendication 1, dans lequel la matière fonctionnalisée par l'acyl-lactame provient d'un polyéther, un polyester-éther, un polyesterhydrocarbure, un hydrocarbure ou des combinaisons de ceux-ci, dans lequel le groupe acyl-lactame est dérivé d'un acide carboxylique et dans lequel l'amine polyfonctionnelle est une polyéther-amine, une polyester-amine, une amine hydrocarbonée ou des combinaisons de celles-ci.

3. Procédé selon la revendication 2, dans lequel l'acyl-lactame provient d'un poly-éther ou un hydrocarbure, le polyéther ou hydrocarbure ayant une masse moléculaire d'au moins 1000.

4. Procédé selon l'une quelconque des revendications précédentes, dans lequel l'amine polyfonctionelle présente une masse moléculaire de 60 à 50.000.

5. Procédé selon l'une quelconque des revendications 1 à 3, dans lequel l'amine polyfonctionnelle est une polyéther-amine ayant une masse moléculaire de 400 à 5000.

6. Procédé selon l'une quelconque des revendications précédentes, dans lequel on fait réagir au moins 0,2 équivalent de l'amine polyfonctionnelle par équivalent de la matière fonctionnalisée avec l'acyllactame.

7. Procédé selon l'une quelconque des revendications 1 à 5, dans lequel on fait réagir 0,3 à 0,6 équivalent d'amine polyfonctionnelle par équivalent de la matière fonctionnalisée à l'acyl-lactame.

8. Procédé selon l'une quelconque des revendications précédentes, dans lequel la matière fonctionnalisée par l'acyl-lactame répond à la formule générale;

$$Z[O-A-(Q)_b]_n$$

dans laquelle Z est un reste d'un polymère élastomère;

A est choisi dans le groupe comprenant:

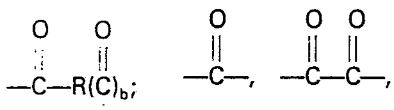 SO$_2$ et $-POR_1-$

dans lesquels:

*b* est un nombre entier égal à 1, 2 ou 3;

R est un groupe hydrocarboné ou polyéther;

$R_1$ est un radical alkyle, aryle, aralkyle, alkyloxy, aryloxy ou aralkyloxy;

*n* est un nombre entier supérieur à 1, de préférence supérieur à 2 et, mieux encore, égal à 3; et

Q est le résidu d'epsilon-caprolactame ou de 2-pyrrolidone.

9. Procédé selon la revendication 8, dans lequel le segment Z est un polyéther, un hydrocarbure, un polyester-éther ou un polyester-hydrocarbure ayant une masse moléculaire d'au moins 1000 et A représente:

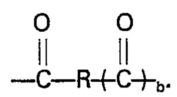

10. Procédé selon la revendication 9, dans lequel R est un 1,3- ou 1,4-phénylène et l'amine polyfonctionelle est une polyéther-amine de 400 à 5000.

11. Polymère qu'on obtient par réaction d'au moins une matière fonctionnalisée par l'acyl-lactame et au moins 0,02 équivalent par équivalent de matière fonctionnalisée à l'acyl-lactame d'au moins une amine polyfonctionnelle, dans lequel la matière fonctionnalisée par l'acyl-lactame est dérivée d'un polymère élastomère ayant une masse moléculaire de 200 à 15000, dans lequel le groupe acyl-lactame est une dérivé de lactame en $C_{3-14}$ d'un acide carboxylique, un acide sulfonique, un phosphoacide ou un défivé thiocarboxylique d'un acide carboxylique et dans lequel l'amine présente une masse moléculaire d'au moins 50 et sa polyfonctionnalité est assurée par au moins deux groupes amine primaire ou secondaire.

12. Polymère selon la revendication 11, dans lequel la matière fonctionnalisée par l'acyl-lactame est telle que définie dans l'une quelconque des revendications 2, 3, 8, 9 et 10.

13. Polymère selon la revendication 11 ou 12, dans lequel l'amine polyfonctionnelle est telle que définie dans la revendication 4 ou 5.

14. Polymère selon l'une quelconque des revendications 12 à 14, qu'on obtient par réaction d'au moins 0,2 équivalent par équivalent de matière fonctionnalisée à l'acyl-lactame d'une amine polyfonctionnelle avec la matière fonctionnalisée à l'acyl-lactame.

15. Polymère selon la revendication 14, qu'on obtient par réaction de 0,3 à 0,6 équivalent d'amine polyfonctionnelle par équivalent de matière fonctionnalisée à l'acyl-lactame.

16. Copolymère séquencé de nylon, comprenant des séquencés d'un polymère selon l'une quelconque des revendications 11 à 15.

17. Copolymère séquencé de nylon, qu'on obtient par réaction d'au moins un lactame en $C_{3-14}$, une matière fonctionnalisée à l'acyl-lactame et au moins une amine polyfonctionnelle en une quantité d'au moins 0,02 équivalent par équivalent de la matière fonctionnalisée à l'acyl lactame en présence d'un catalyseur de polymérisation de lactame, dans lequel le rapport pondéral du lactame en $C_{3-14}$ à la matière fonctionnalisée par l'acyl-lactame et à l'amine polyfonctionnelle est compris entre 9:1 et 1:9, dans lequel la matière fonctionnalisée par l'acyl-lactame est dérivée d'un polymère élastomère ayant une masse moléculaire entre 200 et 15000, dans lequel le groupe acyl-lactame est un dérivé de lactame en $C_{3-14}$ d'un acide carboxylique, un acide sulfonique, un phosphoacide ou un dérivé thiocarboxylique d'un acide carboxylique et dans lequel l'amine présente une masse moléculaire d'au moins 60 et sa polyfonctionnalité est assurée par au moins deux groupes amines primaires ou secondaires.

18. Copolymère séquencé de nylon selon la revendication 17, dans lequel la matière fonctionnalisée par l'acyl-lactame est telle que définie dans l'une quelconque des revendications 3, 8, 9 et 10.

19. Copolymère séquencé de nylon selon la revendication 17 ou 18, dans lequel l'amine polyfonctionnelle est telle que définie dans la revendication 4 ou 5.

20. Copolymère séquencé de nylon selon l'une quelconque des revendication 17 à 19, dans lequel la quantité de l'amine polyfonctionnelle est d'au moins 0,2 équivalent par équivalent de matière fonctionnalisée à l'acyl-lactame.

21. Copolymère séquencé de nylon selon la revendication 20, dans lequel l'amine polyfonctionnelle est comprise entre 0,3 et 0,6 équivalent par équivalent de matière fonctionnalisée à l'acyl-lactame.

22. Procédé de préparation d'un copolymère séquencé de nylon, qui consiste à mélanger un lactame en $C_{3-14}$, une matière fonctionnalisée par l'acyl-lactame, au moins une amine polyfonctionnelle à raison d'au moins 0,02 équivalent par équivalent de la matière fonctionnalisée à l'acyl-lactame et un catalyseur de polymérisation du lactame et à soumettre le mélange à des conditions de polymérisation, dans lequel le rapport pondéral du lactame en $C_{3-14}$ à la matière fonctionnalisée par l'acyl-lactame et à l'amine polyfonctionnele est de 9:1 à 1:9, dans lequel la matière fonctionnalisée par l'acyl-lactame est dérivée d'un polymère élastomère ayant une masse moléculaire de 200 à 15000, dans lequel le groupe acyl-lactame est un dérivé de lactame en $C_{3-14}$ d'un acide carboxylique, un acide sulfonique, un phosphoacide ou un dérivé thiocarboxylique d'un acide carboxylique et dans lequel l'amine a une masse moléculaire d'au moins 60 et sa polyfonctionnalité est assurée par au moins deux groupes amines primaires ou secondaires.

23. Procédé selon la revendication 22, dans lequel la matière fonctionnalisé par l'acyl-lactame est dérivée d'un polyéther, un polyester-éther, un polyester-hydrocarbure, un hydrocarbure ou des combinaisons de ceux-ci, dans lequel le groupe acyl-lactame est dérivé d'un acide carboxylique et dans lequel l'amine polyfonctionnelle est une polyéther-amine, une polyester-éther-amine, une polyester-hydrocarbure-amine, une hydrocarbure-amine ou des combinaisons de celles-ci.

24. Procédé selon la revendication 23, dans lequel la matière fonctionnalisée par l'acyl-lactame répond à la forme générale:

$$Z[O{-}A{-}(Q)_b]_n$$

dans laquelle:

Z est un reste d'un polymère élastomère;

A est choisi dans le groupe comprenant:

$$-\overset{\overset{O}{\|}}{C}-R\!\left(\overset{\overset{O}{\|}}{C}\right)_b,\quad -\overset{\overset{O}{\|}}{C}-,\quad -\overset{\overset{O}{\|}}{C}-\overset{\overset{O}{\|}}{C}-,\quad -SO_2-\quad \text{et}\quad -POR_1-;$$

dans lesquels:

*b* est un nombre entier égal à 1, 2 ou 3;

R est un radical hydrocarboné ou polyéther;

$R_1$ est un radical alkyle, aryle, aralkyle, alkyloxy, aryloxy ou aralkyloxy;

*n* est un nombre entier supérieur à 1, de préférence supérieure à 2 et, mieux encore, égal à 3; et

Q est le reste d'epsilon-caprolactame ou de 2-pyrrolidone.

25. Procédé selon la revendication 24, dans lequel le segment Z est un polyéther, hydrocarbure, polyester-éther ou polyester-hydrocarbure ayant une masse moléculaire d'au moins 1000 et A représente:

$$-\overset{\overset{O}{\|}}{C}-R\!\left(\overset{\overset{O}{\|}}{C}\right)_b.$$

26. Procédé selon l'une quelconque des revendications 22 à 25, dans lequel l'amine polyfonctionnelle présente une masse moléculaire comprise entre 60 et 50000.

27. Procédé selon la revendication 25, dans lequel R est le 1,3- ou 1,4-phénylène et l'amine polyfonctionnelle est une polyéther-amine ayant une masse moléculaire comprise entre 400 et 5000.

28. Procédé selon l'une quelconque des revendications 22 à 27, dans lequel on fait réagir au moins 0,2 équivalent de l'amine polyfonctionnelle par équivalent de matière fonctionnalisée à l'acyl-lactame.

29. Procédé selon la revendication 28, dans lequel on fait réagir 0,3 à 0,6 équivalent d'amine polyfonctionnelle par équivalent de matière fonctionnalisée à l'acyl-lactame.

30. Procédé selon l'une quelconque des revendications 22 à 29, dans lequel on effectue l'étape de mélange à une température inférieure à 110°C environ et on effectue l'étape de polymérisation à une température comprise entre environ 110 et 150°C.